# FASCICULE DE BREVET EUROPEEN

(11) **EP 1 034 703 B1**
(45) Date de publication et mention de la délivrance du brevet: **18.06.2003**
(21) Numéro de dépôt: 99104547.7
(22) Date de dépôt: 08.03.1999
(51) Int. Cl.: A23C 9/13, A23F 5/24, A23C 9/152

(54) **Ensemble comprenant un conteneur et une boisson prête à boire**
Ein Behälter und ein trinkfertiges Getränk enthaltende Anordnung
Assembly containing a container and a ready-to-drink beverage

(43) Date de publication de la demande: 13.09.2000
(73) Titulaire: SOCIETE DES PRODUITS NESTLE S.A., 1800 Vevey (CH)
(72) Inventeur: Jolivet, Elise, 3114 Oberwichterach (CH)
(74) Mandataire: Thomas, Alain

(56) Documents cités:
- EP-A- 0 812 544
- WO-A-98/36671
- FR-A- 1 538 716
- GB-A- 2 089 191
- GB-A- 2 183 592
- GB-A- 2 299 978
- US-A- 4 696 580
- US-A- 4 935 255
- US-A- 4 996 823
- US-A- 5 009 901
- US-A- 5 251 424

## Description

La présente invention concerne un ensemble comprenant un conteneur et disposée dans ledit conteneur une boisson prête à boire de longue conservation et sous pression.

Le brevet GB 2299978 concerne déjà une boisson prête à boire et sous pression conditionnée dans un conteneur. Cette boisson est à base de lait et contient du protoxyde d'azote ou du dioxyde de carbone. Les inconvénients liés à ce système de conditionnement sont les suivants : tout d'abord, au moment de l'utilisation, à savoir au moment où le consommateur ouvre le conteneur, la quantité de mousse obtenue est minime, d'autre part, cette boisson est seulement pasteurisée et doit être proposée à la vente dans des linéaires réfrigérés et aucun espace de tête n'a été prévu pour éviter que la mousse formée ne déborde hors du conteneur et finalement cette boisson est uniquement prévue pour être bue froide. Les brevets US 4'996'823 et 5'009'901 concernent un procédé d'emballage de boisson, ainsi que l'emballage ainsi obtenu, dans lesquels on conditionne dans deux chambres séparées la boisson. La chambre principale contient la boisson et la chambre secondaire, de plus petit volume, est percée d'un orifice et contient un gaz, qui lors de l'ouverture du récipient s'échappe à travers ledit orifice et crée une mousse à la surface de la boisson. L'inconvénient de cette solution est qu'on a un système compliqué et donc onéreux.

Le but de la présente invention est de mettre à disposition du consommateur une boisson prête à boire qui développe au moment de l'ouverture du conteneur dans lequel elle est conditionnée une mousse bien épaisse et bien rémanente, une boisson que l'on peut conserver à température ambiante pendant une année et une boisson qui ne déborde pas lorsque le consommateur ouvre le conteneur et finalement une boisson que l'on peut aussi bien consommer froide que chaude. L'invention permet en outre de trouver une solution avec un emballage standard, sans chambre secondaire.

La présente invention concerne un ensemble comprenant un conteneur et disposée dans ledit conteneur une boisson prête à boire de longue conservation et sous pression, dans lequel la boisson est une boisson de base laitière contenant entre 0,5 et 5 g/l de protoxyde d'azote ou de dioxyde de carbone et dans lequel le conteneur a un espace de tête de 9 à 15 %, par rapport au volume total dudit conteneur, ledit espace étant saturé en azote de manière à avoir une pression relative comprise entre 1,5 et 4 bar.

On a constaté que selon l'invention, la présence d'azote dans l'espace de tête permet de maintenir la pression dans le conteneur et le protoxyde d'azote ou le dioxyde de carbone reste en solution au lieu de s'échapper dans l'espace de tête. On obtient une mousse importante seulement dans les conditions définies ci-dessus de quantité de protoxyde d'azote ou de dioxyde de carbone dissous et de quantité d'azote dans l'espace de tête. On arrive au moment de verser le produit prêt à boire à un volume de mousse compris entre 1 et 5 cm d'épaisseur.

Le conteneur utilisé selon l'invention n'est pas critique : on peut prendre aussi bien un emballage métallique, qu'une bouteille. Dans les cas d'un emballage métallique, on envisage de préférence une boîte en aluminium avec un système d'ouverture facile connu dans l'état de la technique. Dans le cas d'une bouteille, on prend de préférence une bouteille en plastique, par exemple en polyester ou polyéthylène téréphtalate (PET).

La boisson à base laitière est choisie dans le groupe constitué par un lait dilué, un lait normal, un lait concentré, un lait additionné de café, un lait additionné d'arômes, un lait acidifié ou fermenté. La boisson à base laitière peut contenir de la graisse lactique ou une autre graisse exogène, par exemple huile de palme, de colza, de soja ou un mélange d'huiles et de graisse lactique.

Par lait dilué dans la présente description on entend un lait contenant plus de 0,5 % de solides non gras, de préférence entre 0,5 et 8,5 % de solides non gras. Par lait normal, on entend un lait classique du commerce, par exemple ayant une teneur en solides non gras comprise entre 8,5 et 9 %. Par lait concentré, on entend un lait ayant une teneur supérieure à 14 % en solides non gras, de préférence une teneur comprise entre 14 et 20 % de solides non gras. Par lait additionné de café, on entend une base de lait à laquelle on a ajouté de la poudre de café instantané, par exemple entre 0,2 et 4 g de poudre par litre de lait. Par lait additionné d'arômes, on entend une base lait avec un arôme de fruit, comme l'arôme de fraise, de framboise, ou tout autre type d'arôme. Par lait acidifié ou fermenté, on entend une base laitière acidifiée à un pH compris entre 4,4 et 3,5 par addition d'acide citrique, lactique, malique ou autres acides utilisés communément dans l'industrie agro-alimentaire. Par lait fermenté, on entend une base laitière de type yaourt, kéfir, et toute autre base laitière fermentée par une ou plusieurs souches de lactobacilles ou bifidobactéries.

La base laitière contient en outre du sucre, des stabilisants (phosphate, citrate) et/ou épaississants si nécessaires (hydrocolloïdes) , par exemple des pectines dans le cas d'un lait acidifié ou fermenté et des arômes tels que connus dans l'industrie alimentaire.

La présente invention concerne en outre le procédé de fabrication de l'ensemble comprenant le conteneur et la boisson prête à boire, dans lequel on opère selon les étapes suivantes :
- on prépare la base laitière ne mélangeant tous les ingrédients,
- on pasteurise cette base laitière,
- on injecte le protoxyde d'azote ou le dioxyde de carbone dans la base laitière,
- on effectue le remplissage de la base laitière dans le conteneur à un taux de remplissage comprise entre 85 et 91 %,
- on injecte de l'azote liquide dans l'espace de tête,
- on ferme le conteneur et on stérilise.

La préparation de la base laitière se fait par un mélange de tous les constituants, à savoir le lait, le café si la boisson est aromatisée au café, les arômes, le sucre, les stabilisants. Ce mélange est ensuite pasteurisé par les moyens habituellement utilisés dans l'industrie laitière, comme par exemple un échangeur à plaques ou tubulaire. On injecte ensuite le gaz dans la base laitière, à savoir de préférence le protoxyde d'azote pour un produit à pH neutre ou le dioxyde de carbone pour un produit acide. L'injection peut être réalisée par injection en ligne ou dans un réservoir de saturation. Les quantité de mousse les plus importantes sont obtenues avec des pressions dans le réservoir de saturation de l'ordre de 0,4 à 0,6 bar, ce qui correspond à une concentration en protoxyde d'azote ou en dioxyde de carbone comprise entre 0,5 et 5 g/l. Dans certains cas, il est possible d'obtenir une mousse plus importante avec des pressions encore plus élevées mais le produit n'offre pas une qualité optimale parce que la mousse gicle hors du conteneur et parce que la pression dans le conteneur est si haute que le conteneur se déforme lors de la stérilisation.

Le remplissage des conteneurs, à savoir boîtes métalliques, bouteille en polyester ou tout autre récipient supportant la pression, s'effectue avec des machines de remplissage utilisées généralement pour le remplissage des boissons gazeuses . Le conteneur est rempli à entre 85 et 91 % afin de laisser un espace de tête permettant le développement de la mousse. Une quantité comprise entre 0,1 et 0,3 g d'azote liquide (correspondant à un espace de tête d'environ 40 ml) est ensuite injectée dans l'espace de tête afin d'éviter que tout le gaz dissout s'échappe dans l'espace de tête et fasse ainsi perdre à la boisson sa propriété moussante. La quantité d'azote liquide permet d'obtenir une pression relative dans le conteneur comprise entre 1,5 et 4 bar. Le conteneur est ensuite fermé, par exemple par sertissage. Le produit prêt à boire est finalement stérilisé, par exemple dans un stérilisateur à 116 °C pendant 12 minutes. La stérilisation demande des contre-pressions relativement hautes par rapport à celles utilisées lors de la stérilisation des produits laitiers qui ne contiennent pas de gaz. La pression maximale enregistrée dans les boîtes est de 9 bar.

La suite de la description est faite maintenant en relation avec les exemples.

### Exemple 1

Une base laitière aromatisée à la banane est composée de 8,5 % de solides non gras lactiques, 1,6 % de graisse lactique, 4 % de sucre et des arômes de banane. Du protoxyde d'azote est injecté dans la base laitière disposée dans un réservoir de saturation, de manière à atteindre dans ledit réservoir une pression de 0,6 bar. La boisson est ensuite remplie dans une boîte en aluminium avec un espace de tête de 12 %. Une quantité d'azote liquide telle qu'une pression de 2,4 bar se développe dans la boîte est injectée dans l'espace de tête. La boîte sertie est ensuite stérilisée.

Au moment de la consommation, la boisson prête à boire génère une hauteur de mousse de 1,5 cm après avoir été versée dans un verre.

### Exemple 2

On reprend exactement les conditions de l'exemple 1, mais dans ce cas, l'espace de tête n'est pas rempli d'azote liquide. La boisson prête à boire ne développe pas de mousse.

### Exemple 3

On reprend à nouveau les conditions de l'exemple 1, mais dans ce cas on injecte une quantité moins élevée d'azote liquide, de manière à avoir une pression totale dans la boîte de 1,3 bar. La boisson prête à boire ne génère qu'une hauteur de mousse de 0,5 cm, ce qui est insuffisant.

### Exemple 4

On prépare une base laitière aromatisée au café qui contient 4 % de solides non gras, 1 % de caséinate, 1 % de graisse, 0,5 % de café en poudre et 4 % de sucre. Cette base est stabilisée par des phosphates. Du protoxyde d'azote est injecté de la même façon que dans l'exemple 1. La boisson laitière est ensuite remplie dans une boîte métallique en aluminium avec un espace de tête de 12 %. On injecte une quantité d'azote liquide dans l'espace de tête telle que la pression finale est de 2,5 bar. Le produit final est stérilisé en autoclave. Au moment de la consommation, ledit produit génère une mousse ayant une hauteur de 3,5 cm. Il s'agit d'un cappuccino prêt à boire qui mousse lors de l'ouverture de la boîte.

### Exemple 5

On répète l'exemple 4 en injectant dans l'espace de tête une quantité d'azote liquide permettant d'avoir dans la boîte une pression finale de 1 bar. Le produit prêt à boire ne génère qu'une hauteur de mousse de 0,5 cm.

### Exemple 6

On prépare une base laitière contenant 1,8 % de solides non gras,9 % de sucre, 0,001 % d'alginate et on l'acidifie chimiquement ou on la fait fermenter. Le pH de la boisson est de 3,8. La boisson est pasteurisée et on y injecte du dioxyde de carbone selon le même procédé que dans l'exemple 1. La pression dans le réservoir est de 0,4 bar. La boisson est remplie dans des boîtes métalliques. On injecte de l'azote liquide dans un espace de tête faisant 12 % du volume total, de manière à ce que la pression dans la boîte atteigne 3,5 bar. Les boîtes sont finalement stérilisées dans un autoclave à 85 °C pendant 15 minutes. Le produit final génère une mousse de 2 cm de hauteur après ouverture.

### Exemple 7

On reprend les mêmes conditions que dans l'exemple 6 avec une pression de 1 bar dans le réservoir de stockage. Le produit prêt à boire gicle hors du conteneur lors de l'ouverture.

## Revendications

1. Ensemble comprenant un conteneur et disposée dans ledit conteneur une boisson prête à boire de longue conservation et sous pression, dans lequel la boisson est une boisson de base laitière contenant entre 0,5 et 5 g/1 de protoxyde d'azote ou de dioxyde de carbone, et le conteneur a un espace de tête de 9 à 15 %, par rapport au volume total dudit conteneur, ledit espace étant saturé en azote de manière à avoir une pression relative comprise entre 1,5 et 4 bar.

2. Ensemble selon la revendication 1, **caractérisé en ce que** le conteneur est choisi dans le groupe constitué par un emballage métallique et une bouteille.

3. Ensemble selon l'une des revendications 1 ou 2, **caractérisé en ce que** la boisson de base laitière est choisie dans le groupe constitué par un lait dilué, un lait normal, un lait concentré, un lait additionné de café, un lait additionné d'arômes, un lait acidifié ou fermenté.

4. Ensemble selon la revendication 3, **caractérisé en ce que** la boisson de base laitière contient en outre du sucre, des stabilisants, des épaississants et des arômes.

5. Procédé de fabrication de l'ensemble selon l'une quelconque des revendications 1 à 4, dans lequel on opère selon les étapes suivantes :
- on prépare la base laitière ne mélangeant tous les ingrédients,
- on pasteurise cette base laitière,
- on injecte le protoxyde d'azote ou le dioxyde de carbone dans la base laitière,
- on effectue le remplissage de la base laitière dans le conteneur à un taux de remplissage comprise entre 85 et 91 %,
- on injecte de l'azote liquide dans l'espace de tête,
- on ferme le conteneur et on stérilise.

6. Procédé selon la revendication 5, **caractérisé en ce qu'**on injecte du protoxyde d'azote ou du dioxyde de carbone de manière à avoir dans la base laitière une quantité de gaz comprise entre 0,5 et 5 g/l.

7. Procédé selon l'une des revendications 5 ou 6, **caractérisé en ce qu'**on injecte entre 0,1 et 0,3 g d'azote liquide pour un espace de tête d'environ 40 ml.

## Patentansprüche

1. Einheit, umfassend einen Behälter und ein in diesem Behälter angeordnetes, unter Druck stehendes trinkfertiges Getränk langer Haltbarkeit, wobei das Getränk ein Getränk auf Milchbasis ist, das 0,5 bis 5 g/l Stickstoffoxid oder Kohlendioxid enthält, und der Behälter einen Kopfraum von 9% bis 15%, bezogen auf sein Gesamtvolumen, besitzt, der mit Stickstoff so gesättigt ist, daß ein relativer Druck zwischen 1,5 und 4 bar herrscht.

2. Einheit nach Anspruch 1, **dadurch gekennzeichnet, daß** der Behälter aus der Gruppe ausgewählt ist, die aus einer Metallverpackung und einer Flasche besteht.

3. Einheit nach einem der Ansprüche 1 oder 2, **dadurch gekennzeichnet, daß** das Getränk auf Milchbasis aus der Gruppe ausgewählt ist, die aus verdünnter Milch, normaler Milch, konzentrierter Milch, mit Kaffee versetzter Milch, mit Aromastoffen versetzter Milch, angesäuerter oder fermentierter Milch besteht.

4. Einheit nach Anspruch 3, **dadurch gekennzeichnet, daß** das Getränk auf Milchbasis außerdem Zucker, Stabilisatoren, Verdickungsmittel und Aromastoffe enthält.

5. Verfahren zur Herstellung der Einheit nach einem der Ansprüche 1 bis 4, bei dem man in den folgenden Schritten vorgeht:
- man stellt die Milchbasis her, indem alle Zutaten gemischt werden,
- man pasteurisiert diese Milchbasis,
- man spritzt in die Milchbasis Stickstoffoxid oder Kohlendioxid ein,
- man füllt die Milchbasis in den Behälter mit einem Füllgrad von 85 bis 91% ein,
- man spritzt flüssigen Stickstoff in den Kopfraum ein,
- man verschließt den Behälter und sterilisiert.

6. Verfahren nach Anspruch 5, **dadurch gekennzeichnet, daß** man Stickstoffoxid oder Kohlendioxid so einspritzt, daß man in der Milchbasis eine Gasmenge zwischen 0,5 und 5 g/l erhält.

7. Verfahren nach einem der Ansprüche 5 oder 6, **dadurch gekennzeichnet, daß** man zwischen 0,1 und 0,3 g flüssigen Stickstoff bei einem Kopfraum von etwa 40 ml einspritzt.

## Claims

1. Assembly comprising a container and disposed in the said container a long-life ready-to-drink beverage under pressure, wherein the beverage is a milk-based beverage containing between 0.5 and 5 g/l of nitrogen monoxide or carbon dioxide, and the container has a headspace of 9 to 15 % based on the total volume of the container, the said space being saturated with nitrogen so as to have a relative pressure of between 1.5 and 4 bar.

2. Assembly according to claim 1, **characterized in that** the container is chosen from the group consisting of a metal can and a bottle.

3. Assembly according to either of claims 1 or 2, **characterized in that** the milk-based beverage is chosen from the group consisting of a diluted milk, a normal milk, a concentrated milk, a milk with the addition of coffee, a milk with the addition of flavourings, an acidified milk or a fermented milk.

4. Assembly according to claim 3, **characterized in that** the milk-based beverage additionally contains sugar, stabilisers, thickeners and flavourings.

5. Method for producing the assembly according to any one of claims 1 to 4, wherein the following steps are carried out:
- the milk base is prepared by mixing all the ingredients,
- this milk base is pasteurised,
- nitrogen monoxide or carbon dioxide is injected into the milk base,
- the milk base is filled into the containers to a filling level of between 85 and 91 %,
- liquid nitrogen is injected into the headspace,
- the container is closed and sterilised.

6. Method according to claim 5, **characterized in that** nitrogen monoxide or carbon dioxide is injected so as to have a quantity of gas in the milk base of between 0.5 and 5 g/l.

7. Method according to either of claims 5 or 6, **characterized in that** between 0.1 and 0.3 g of liquid nitrogen is injected for a headspace of approximately 40 ml.
